# EUROPEAN PATENT APPLICATION

(11) **EP 4 572 385 A1**
(43) Date of publication of application: **18.06.2025**
(21) Application number: 22955002.5
(22) Date of filing: 10.08.2022
(51) Int. Cl.: H04W 24/10, H04W 72/0446, H04W 72/0453

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/030647
(87) International publication number: WO 2024/034086

(57) **Abstract**

A terminal according to one aspect of the present disclosure includes a receiving section that receives a measurement timing window for measurement of layer 1 at a plurality of frequencies, the measurement timing window being different for each of the frequencies, and a control section that controls the measurement of layer 1 during the measurement timing window. According to an aspect of the present disclosure, it is possible to perform appropriate measurement or reporting at a plurality of frequencies.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a radio communication system, it is being contemplated that one or more cells/Transmission/Reception Point (TRP) (Multi-TRP (MTRP)) perform downlink (DL) transmission to terminals (user terminals, User Equipment (UE)).

When a multi-TRP is applied, the serving cell may be switched to a cell (additional cell) with a PCI different from that of the serving cell by signaling at least one of layer 1 and layer 2 (L1/L2 inter-cell mobility (layer 1/layer 2 inter-cell mobility)).

However, when the frequencies of the PCIs are different, it is not clear how to make the settings for CSI measurement and reporting (for example, L1-RSRP, L1-SINR measurement and reporting) at each frequency, and how to perform the measurement or reporting. If the measurement or reporting at a plurality of frequencies is not performed appropriately, there may occur problems such as a decrease in communication throughput.

In view of this, an object of the present disclosure is to provide a terminal, a radio communication method, and a base station that allow appropriate measurement or reporting at a plurality of frequencies.

### Solution to Problem

A terminal according to one aspect of the present disclosure includes a receiving section that receives a measurement timing window for measurement of layer 1 at a plurality of frequencies, the measurement timing window being different for each of the frequencies, and a control section that controls the measurement of layer 1 during the measurement timing window.

### Advantageous Effects of Invention

According to an aspect of the present disclosure, it is possible to perform appropriate measurement or reporting at a plurality of frequencies.

### Brief Description of Drawings

[FIG. 1] FIGS. 1A to 1D are diagrams showing configuration examples of a multi-TRP.
[FIG. 2] FIG. 2A is a diagram showing an example of UE movement in Rel. 17, and FIG. 2B is a diagram showing an example of UE movement in Rel. 18.
[FIG. 3] FIG. 3 is a diagram showing an example of association between serving cells and candidate cells.
[FIG. 4] FIG. 4A is a diagram showing a first example of ServingCellConfig of option 1, and FIG. 4B is a diagram showing a second example of ServingCellConfig of option 1.
[FIG. 5] FIG. 5 is a diagram showing a first example of option 2.
[FIG. 6] FIG. 6A is a diagram showing a second example of option 2, and FIG. 6B is a diagram showing a third example of option 2.
[FIG. 7] FIG. 7 is a diagram showing a serving cell switch example 1.
[FIG. 8] FIG. 8 is a diagram showing a serving cell switch example 2.
[FIG. 9] FIG. 9 is a diagram showing a serving cell switch example 3.
[FIG. 10] FIG. 10 is a diagram showing an overview of CSI report configuration of RRC.
[FIG. 11] FIG. 11 is a diagram showing a part of CSI resource configuration of Rel. 17.
[FIG. 12] FIG. 12 is a diagram showing a part of a CSI-SSB resource set of Rel. 17.
[FIG. 13] FIG. 13 is a diagram showing a configuration for L3 measurement/reporting of Rel. 17.
[FIG. 14] FIG. 14 is a diagram showing an example of RSRP values of a plurality of frequencies.
[FIG. 15] FIG. 15 is a diagram showing an example of CSI-SSB-ResourceSet of option 1 according to a first embodiment.
[FIG. 16] FIG. 16 is a diagram showing an example of CSI-SSB-ResourceSet of option 2 according to the first embodiment.
[FIG. 17] FIG. 17 is a diagram showing an example of a CSI report according to a second embodiment.
[FIG. 18] FIG. 18 is a diagram showing an example of beam reports of a plurality of frequency.
[FIG. 19] FIG. 19 is a diagram showing an example of case 1 of L1 inter-frequency measurement.
[FIG. 20] FIG. 20 is a diagram showing an example of case 2 of L1 inter-frequency measurement.
[FIG. 21] FIG. 21 is a diagram showing an example of case 3 of L1 inter-frequency measurement.
[FIG. 22] FIG. 22 is a diagram showing an example of an MTW and an MG according to a fifth embodiment.
[FIG. 23] FIG. 23 is a diagram showing an example of option 2 according to the fifth embodiment.
[FIG. 24] FIG. 24 is a diagram showing an example of option 3 according to the fifth embodiment.
[FIG. 25] FIG. 25 is a diagram showing an example of a schematic configuration of a radio communication system according to an embodiment.
[FIG. 26] FIG. 26 is a diagram showing an example of a configuration of a base station according to an embodiment.
[FIG. 27] FIG. 27 is a diagram showing an example of a configuration of a user terminal according to an embodiment.
[FIG. 28] FIG. 28 is a diagram showing an example of a hardware configuration of a base station and a user terminal according to an embodiment.
[FIG. 29] FIG. 29 is a diagram showing an example of a vehicle according to an embodiment.

### Description of Embodiments

### (Multi-TRP)

In an NR, it is being contemplated that one or more Transmission/Reception Points (TRPs) (multi-TRP) perform DL transmission to a UE using one or more panels (multi-panel). It is also being contemplated that a UE performs UL transmission to one or more TRPs.

Note that that a plurality of TRPs may correspond to the same cell identifier (ID) or different cell IDs. The cell ID may be a physical cell ID or a virtual cell ID.

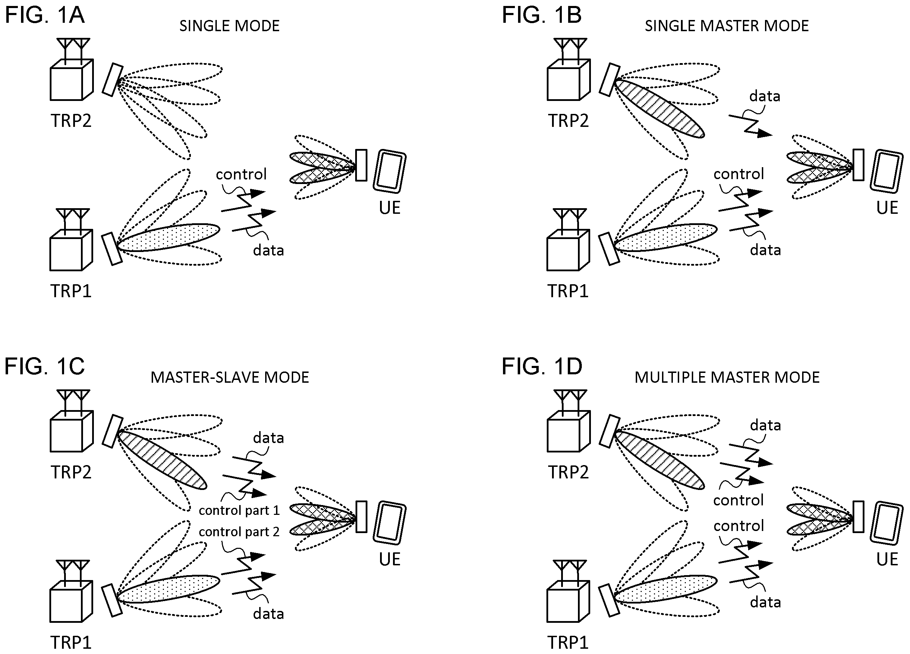

FIGS. 1A to 1D are diagrams showing examples of a multi-TRP scenario. In these examples, it is assumed that the TRPs are capable of transmitting four different beams, but the present disclosure is not limited to this configuration.

FIG. 1A shows an example of a case where only one TRP (TRP1 in this example) in a multi-TRP performs transmissions to the UE (which may be called single mode, single TRP, or the like). In this case, TRP1 transmits both a control signal (PDCCH) and a data signal (PDSCH) to the UE.

FIG. 1B shows an example of a case where only one TRP (TRP1 in this example) in the multi-TRP transmits a control signal to the UE and the multi-TRP transmits a data signal to the UE (which may be called a single master mode). The UE receives each PDSCH transmitted from the multi-TRP based on one piece of Downlink Control Information (DCI).

FIG. 1C shows an example of a case where each piece of the multi-TRP transmits a part of a control signal to the UE and the multi-TRP transmits a data signal to the UE (which may be called a master-slave mode). TRP1 may transmit a part 1 of the control signal (DCI), and TRP2 may transmit a part 2 of the control signal (DCI). The part 2 of the control signal may depend on the part 1. The UE receives each PDSCH transmitted from the multi-TRP based on these parts of DCI.

FIG. 1D shows an example of a case where each piece of the multi-TRP transmits a separate control signal to the UE and the multi-TRP transmits a data signal to the UE (which may be called a multi-master mode). TRP1 may transmit a first control signal (DCI), and TRP2 may transmit a second control signal (DCI). The UE receives each PDSCH transmitted from the multi-TRP based on these DCIs.

If a plurality of PDSCHs (which may be referred to as multiple PDSCHs) from a multi-TRP as in FIG. 1B are scheduled using one DCI, the DCI may be referred to as a single DCI (S-DCI, single PDCCH). Also, when a plurality of PDSCHs from a multi-TRP as in FIG. 1D are scheduled using a plurality of DCIs, the plurality of DCIs may be referred to as multi-DCI (M-DCI, multiple PDCCHs).

Different transport blocks (TBs) /code words (CWs)/different layers may be transmitted from each piece of the multi-TRP. Alternatively, the same TB/CW/layer may be transmitted from each piece of the multi-TRP.

As one form of multi-TRP transmission, Non-Coherent Joint Transmission (NCJT) is being contemplated. In NCJT, for example, TRP1 modulates and maps a first codeword, and transmits a first PDSCH using a first number of layers (for example, two layers) through layer mapping and a first precoding. TRP2 modulates and maps a second codeword, and transmits a second PDSCH using a second number of layers (for example, two layers) through layer mapping and a second precoding.

Note that that a plurality of PDSCHs (multi-PDSCH) that are subjected to NCJT may be defined as partially or completely overlapping in at least one of the time and the frequency domain. That is, the first PDSCH from the first TRP and the second PDSCH from the second TRP may overlap in at least one of the time and the frequency resources.

The first PDSCH and the second PDSCH may be assumed not to be in a Quasi-Co-Location (QCL) relation (not quasi-co-located). Reception of a multi-PDSCH may be read as simultaneous reception of PDSCHs that are not of a certain QCL type (for example, QCL type D).

In URLLC for a multi-TRP, it is being contemplated that PDSCH (transport block (TB) or code word (CW)) repetition across the multi-TRP is supported. It is being contemplated that repetition schemes (URLLC schemes, for example, schemes 1, 2a, 2b, 3, and 4) across a multi-TRP in a frequency domain, a layer (spatial) domain, or a time domain are supported. In the scheme 1, a multi-PDSCH from a multi-TRP is subjected to space division multiplexing (SDM). In the schemes 2a and 2b, PDSCHs from a multi-TRP are subjected to frequency division multiplexing (FDM). In the scheme 2a, the redundancy version (RV) is the same for the multi-TRP. In the scheme 2b, the RV may be the same or different for the multi-TRP. In the schemes 3 and 4, a multi-PDSCH from a multi-TRP is subjected to time division multiplexing (TDM). In the scheme 3, the multi-PDSCH from the multi-TRP is transmitted in one slot. In the scheme 4, the multi-PDSCH from the multi-TRP is transmitted in different slots.

These multi-TRP scenarios allow for more flexible transmission control using good-quality channels.

NCJT with multi-TRP/panel may use high rank. In order to support ideal and non-ideal backhaul between a plurality of TRPs, both single DCI (single PDCCH, for example, FIG. 1B) and multi-DCI (multi-PDCCH, for example, FIG. 1D) may be supported. For both single DCI and multi-DCI, the maximum number of TRPs may be two.

For single PDCCH design (mainly for ideal backhaul), TCI extension is being contemplated. Each TCI code point in the DCI may correspond to TCI state 1 or 2. The TCI field size may be the same as that of Rel. 15.

### (L1/L2 Inter-Cell Mobility)

As described above, it is being contemplated that the UE performs UL transmission to one or more cells/TRPs. In this case, the following scenario 1 or scenario 2 is considered as a procedure. Note that that, in the present disclosure, the serving cell may be read as a TRP in the serving cell. Layer 1/layer 2 (L1/L2) and DCI/Medium Access Control Control Element (MAC CE) may be read interchangeably. In the present disclosure, a PCI different from the Physical Cell Identity (PCI) of the current serving cell may be simply described as a "different PCI". A non-serving cell, a cell having a different PCI, and an additional cell may be read interchangeably.

### <Scenario 1>

Scenario 1 corresponds to the inter-cell mobility of a multi-TRP, for example, but it may also be a scenario that does not correspond to the inter-cell mobility of a multi-TRP.

(1) The UE receives, from a serving cell, the configuration necessary to use radio resources for data transmission and reception, including an SSB configuration for beam measurement of a TRP corresponding to a PCI different from that of the serving cell, and resources of the different PCI.
(2) The UE performs beam measurements of the TRP corresponding to the different PCI and reports the beam measurement results to the serving cell.
(3) Based on the above report, the Transmission Configuration Indication (TCI) state associated with the TRP corresponding to the different PCI is activated by L1/L2 signaling from the serving cell.
(4) The UE performs transmission and reception using a UE-dedicated channel on the TRP corresponding to the different PCI.
(5) The UE needs to always cover the serving cell, including in the case of a multi-TRP. The UE needs to use a common channel (broadcast control channel (BCCH)) from the serving cell, a paging channel (PCH), or the like, as in the conventional system.

In the scenario 1, when the UE transmits/receives signals to/from an additional cell/TRP (a TRP corresponding to the PCI of the additional cell), the serving cell (the serving cell assumption in the UE) is not changed. The UE is configured with higher layer parameters related to the PCI of a non-serving cell from the serving cell. The scenario 1 may be applied in Rel. 17, for example.

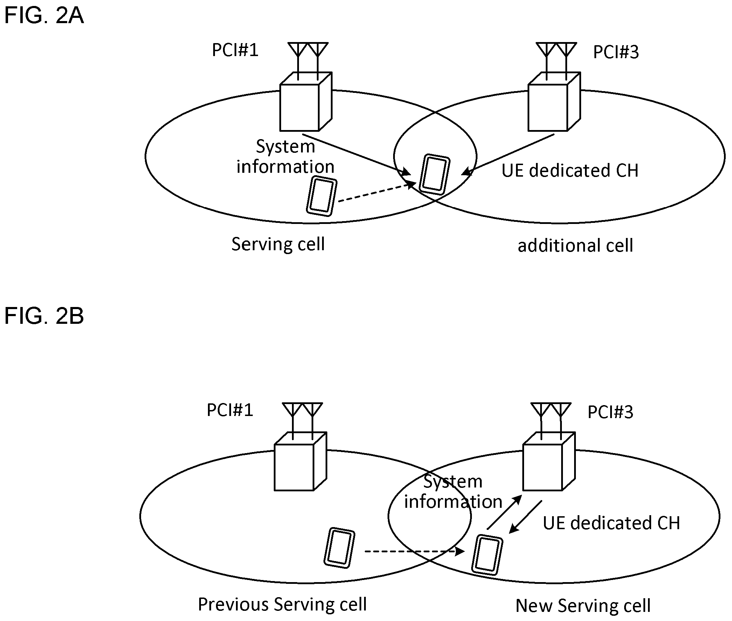

FIG. 2A is a diagram showing an example of UE movement in Rel. 17. Assume that the UE moves from a cell with PCI #1 (serving cell) to a cell with PCI #3 (additional cell) (which overlaps with the serving cell). In this case, in Rel. 17, the serving cell is not switched by L1/L2. The additional cell is a cell with an additional PCI that is different from the PCI of the serving cell. The UE can receive/transmit a UE dedicated channel from the additional cell. The UE needs to be within the coverage of the serving cell in order to receive UE common channels (for example, system information/paging/short messages).

### <Scenario 2>

In the scenario 2, L1/L2 inter-cell mobility is applied. In the L1/L2 inter-cell mobility, the serving cell can be changed using a function such as beam control without RRC reconfiguration. In other words, transmission and reception to and from an additional cell is possible without a handover. Since a handover requires RRC reconnection and creates a period during which data communication is not possible, applying the L1/L2 inter-cell mobility that does not require a handover makes it possible to continue data communication even when the serving cell is changed. The scenario 2 may be applied in Rel. 18, for example. In the scenario 2, the following procedure is performed, for example.

(1) The UE receives an SSB configuration of a cell (additional cell) with a different PCI from the serving cell for beam measurement/serving cell change.
(2) The UE performs beam measurement of the cell with a different PCI and reports the measurement result to the serving cell.
(3) The UE may receive a configuration of the cell with a different PCI (serving cell configuration) by higher layer signaling (for example, RRC). That is, a pre-configuration regarding a serving cell change may be made. This configuration may be made together with or separately from the configuration in (1) .
(4) Based on the above report, the TCI state of the cell with a different PCI may be activated by L1/L2 signaling according to the change of the serving cell. The activation of the TCI state and the change of the serving cell may be performed separately.
(5) The UE changes the serving cell (serving cell assumption) and starts reception/transmission using a pre-configured UE-specific channel and the TCI state.

That is, in the scenario 2, the serving cell (the serving cell assumption in the UE) is updated by L1/L2 signaling. The scenario 2 may be applied in Rel. 18.

FIG. 2B is a diagram showing an example of UE movement in Rel. 18. In Rel. 18, the serving cell is switched by L1/L2. The UE can receive/transmit UE-dedicated/common channels to/from the new serving cell. The UE may move out of the coverage of the previous serving cell.

### (Configuration of Plurality of Candidate Cells)

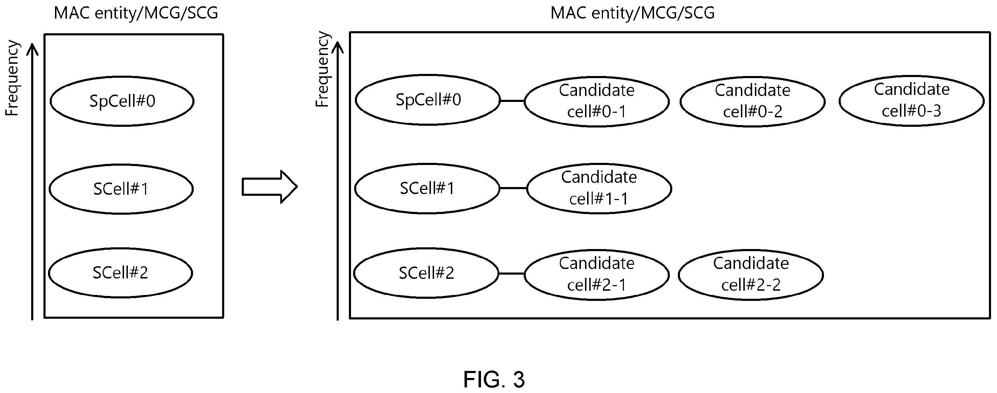

FIG. 3 is a diagram showing an example of association between serving cells and candidate cells. SpCell #0, SCell #1, or SCell #2 is assumed to be a serving cell. Note that that SpCell means a special cell (including a primary cell (PCell) and a primary secondary cell (PSCell)). SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this way, one or more candidate cells (candidate serving cells) may be associated with a serving cell.

Regarding the configuration of cells that are candidates (candidate cells) with a change of the serving cell, the following options 1 and 2 are considered, for example.

### <Option 1>

Like the inter-cell mobility in Rel. 17, the information in ServingCellConfig may include information about a plurality of candidate cells. In this case, the plurality of candidate cells needs to share the same configurations of PDCCH/PDSCH/UL as those of the serving cell.

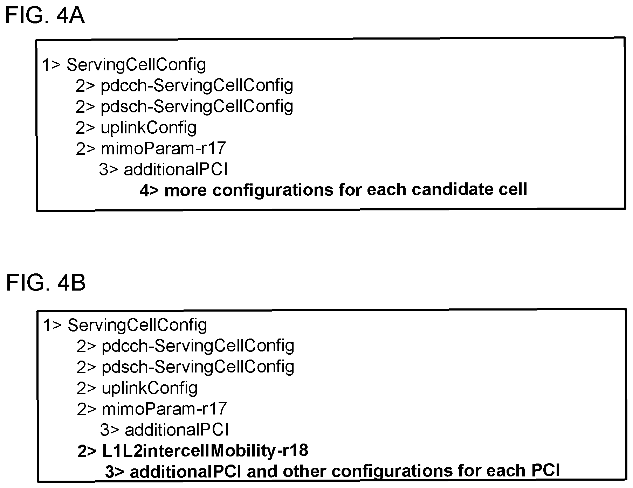

For example, in the inter-cell mobility of Rel. 17, it is being contemplated that "mimoParam-r17" is added under ServingCellConfig and PCI configuration information is added (FIGS. 4A and 4B). This framework is applied when cells with different PCIs share the same PDCCH/PDSCH/UL configurations.

For each candidate cell, more configurations may be applied, such as LTE CRS patterns and RACH configurations. Also, cell-specific CSI-RS configurations (for CSI/TRS) may be taken into account, allowing different CSI-RS opportunities/resources to be configured for each cell to reduce interference.

FIG. 4A is a diagram showing a first example of ServingCellConfig for the option 1. Referring to FIG. 4A, ServingCellConfig includes configurations of additional cells (candidate cells). FIG. 4B is a diagram showing a second example of ServingCellConfig for the option 1. Referring to FIG. 4B, ServingCellConfig includes configurations of additional cells (candidate cells) for L1/L2 inter-cell mobility. FIG. 4A corresponds to the above-described scenario 1, for example. FIG. 4B corresponds to the above-described scenario 2, for example.

As shown in FIGS. 4A and 4B, the candidate cells are pre-configured by RRC. As an initial state, the candidate cells may be fixedly activated/deactivated in the specifications, or may be configured to be activated/deactivated by RRC. Furthermore, the candidate cells for the L1/L2 cell switch may be activated/deactivated by the MAC CE. The L1/L2 cell switch indication may be sent only from the active cells.

### <Option 2>

A plurality of candidate cells may be associated with each serving cell by reusing the carrier aggregation (CA) configuration framework, with a complete configuration (for example, ServingCellConfig) corresponding to each cell. The UE is provided with the complete configuration for each candidate cell, so that it can communicate properly with the candidate cells.

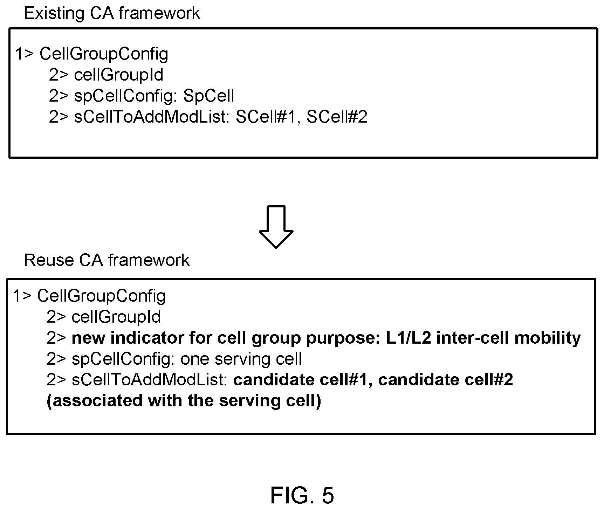

In a CA configuration framework, an SpCell can be configured for each cell group and a plurality of SCells can be added. When the CA framework is reused, a serving cell can be configured and a plurality of candidate cells can be configured for each cell group for L1/L2 inter-cell mobility (FIG. 5). Candidate cells can be activated/deactivated by MAC CE. This method is considered to be beneficial to reduce the complexity of UE operation. As an example, CellGroupConfig for cell group ID 0 is shown.

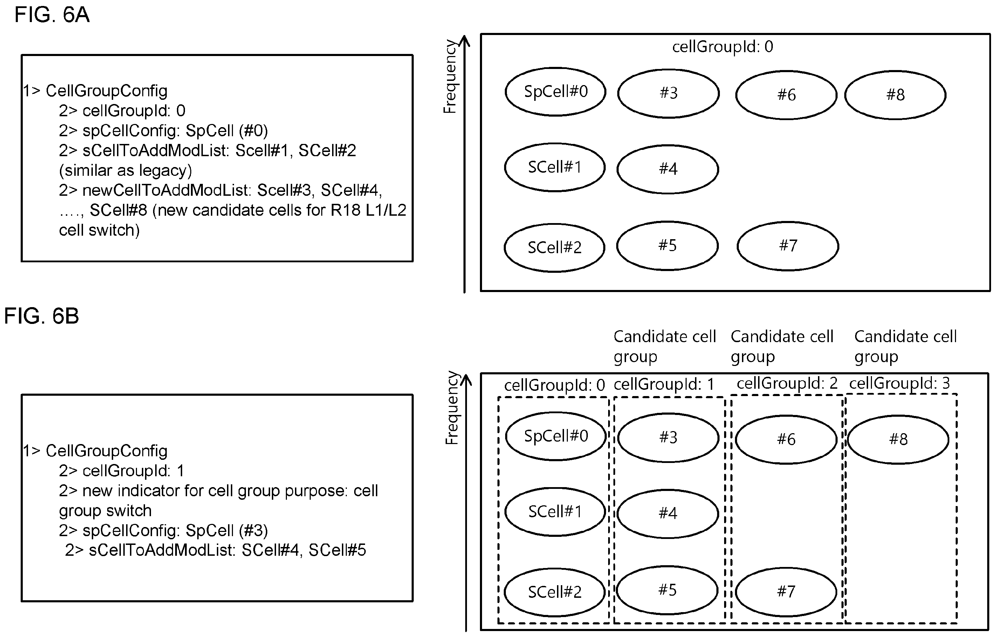

FIG. 6A shows a second example of the option 2. In the example of FIG. 6A, a common candidate cell pool for cell switching in MCG/SCG is applied to the candidate cells. That is, the candidate cells are treated as one pool (group) regardless of frequency band.

FIG. 6B is a diagram showing a third example of the option 2. In the example of FIG. 6B, a plurality of cell groups is configured, and cell group switching is possible by L1/L2 signaling. Candidate cells are configured for each cell group, and the configuration of each group includes the indexes of the corresponding SpCell and SCell. FIG. 6B shows CellGroupConfig for the cell group ID: 1 as an example.

### (Signaling for Serving Cell Change Indication)

Implicit or explicit signaling for serving cell change indication will be described.

### [Aspect 1]

In aspect 1, implicit signaling for serving cell change indication will be described.

### [[Option 1-1]]

If a specific control resource set (CORESET) (for example, CORESET #0, CORESET in CH5 Type0-CSS, and at least one of CORESETs in CH6/CH7/CH8 CSS) is indicated (activated) by a MAC CE together with one or more TCI states associated with a cell with a PCI different from that of the serving cell (if, for a particular CORESET, one or more TCI states associated with a cell with a PCI different from that of the serving cell are indicated/activated by a MAC CE), the UE may determine that the serving cell is to be changed to another cell (cell x, a cell with a different PCI). That is, this activation may implicitly indicate that the serving cell is changed to another cell.

In this case, the UE may update beams of other CORESET IDs, other CORESETs using CH6/CH7/CH8, or other CORESETs using CSS to the same TCI state as the activated TCI state.

### [[Option 1-2]]

When the MAC CE activates/deactivates the TCI states of a PDSCH, if all the TCI states activated by the MAC CE are associated with the same cell x with a PCI different from that of the serving cell, the UE may determine that the serving cell is to be changed to another cell (cell x). That is, the association may implicitly indicate the change of the serving cell to another cell.

In the case where this option applies, if an NW (base station) does not change the serving cell, when the MAC CE activates the TCI state of a PDSCH associated to a cell with a different PCI, it is necessary to include the TCI state related to another cell (for example, the current serving cell or a second cell with a different PCI).

### [[Option 1-3]]

When the MAC CE activates/deactivates unified TCI states (for example, corresponding to the unified TCI framework in Rel. 17) and all the activated unified TCI states are associated with the same cell x with different PCIs, the UE may determine that the serving cell is to be changed to another cell (cell x). That is, the association may implicitly indicate the change of the serving cell to another cell.

### [Aspect 2]

In aspect 2, explicit signaling for a serving cell change instruction will be described. In the aspect 2, for example, the above-described scenario 2 is applied.

### [[Option 2-1]]

An example of a serving cell change instruction will be described below. Note that the activation/deactivation of a non-serving cell, the change of a serving cell, and transmission/reception with another cell (non-serving cell) with a physical cell ID different from the physical cell ID of the serving cell may be read interchangeably.

The UE may receive a new MAC CE including at least one of fields (information) indicating the following (1) to (3) corresponding to a non-serving cell for use in activating/deactivating the non-serving cell. Upon receipt of the MAC CE, the UE may determine that the serving cell is to be changed to another cell (non-serving cell). Based on the information, the UE may control transmission and reception of DL signals/UL signals with the non-serving cell. Note that the non-serving cell may be one or more. In the example shown below, a MAC CE including a plurality of fields indicating a plurality of non-serving cell indices is applied.

(1) Serving cell ID.
(2) BWP ID.
(3) Non-serving cell ID for use in activation. The non-serving cell ID may be replaced with any information corresponding to a non-serving cell (by which a non-serving cell can be identified).

As an example of (3), for example, any of (3-1) to (3-5) below may be applied.
(3-1) PCI (directly used PCI). For example, 10 bits are used.
(3-2) Re-creation index (new ID) of a non-serving cell. The new ID is associated with a part of the PCI and may be configured only for serving cells and non-serving cells used (usable) by the UE. The new ID can reduce the number of bits compared to the PCI.
(3-3) CSI report configuration ID (CSI-ReportConfigId) (where CSI-ReportConfig corresponds to one or more non-serving cells).
(3-4) CSI resource configuration ID (CSI-ResourceConfigId) (where CSI-ResourceConfigId corresponds to one or more non-serving cells).
(3-5) A bitmap indicating the activation/deactivation of each non-serving cell. The size (number of bits) of the bitmap may be the same as the number of non-serving cells configured on this CC. For example, "010" is configured in the case of activating the second one of three non-serving cells.

At least one of the pieces of information included in the MAC CE may be included in the DCI. Otherwise, at least one of the serving cells activated by the MAC CE may be indicated by the DCI. The MAC CE/DCI may include a field indicating the TCI state/SSB/CSI-RS from a cell with a different PCI so that the UE can recognize the DL beam to be monitored on the target cell (the serving cell after the change). The UE may create and transmit a beam report (CSI report) using the TCI state/SSB/CSI-RS.

### [[Option 2-2]]

The UE may receive a MAC CE in which a new 1-bit field "C" is added to the existing MAC CE. The field indicates whether to change the serving cell. The UE may receive the MAC CE and determine whether to change the serving cell to another cell based on the field.

### [[Option 2-3]]

For the MAC CE in the option 2-2, a field indicating the serving cell index/PCI/other ID (such as the new ID in the option 2-1 described above) and a field indicating the TCI state/SSB/CSI-RS of the target cell (the serving cell after the change) may be further included in the MAC CE.

In this way, since the instruction for serving cell change is provided by the MAC CE/DCI, the UE can appropriately change the serving cell.

### [Serving Cell Switch Example 1]

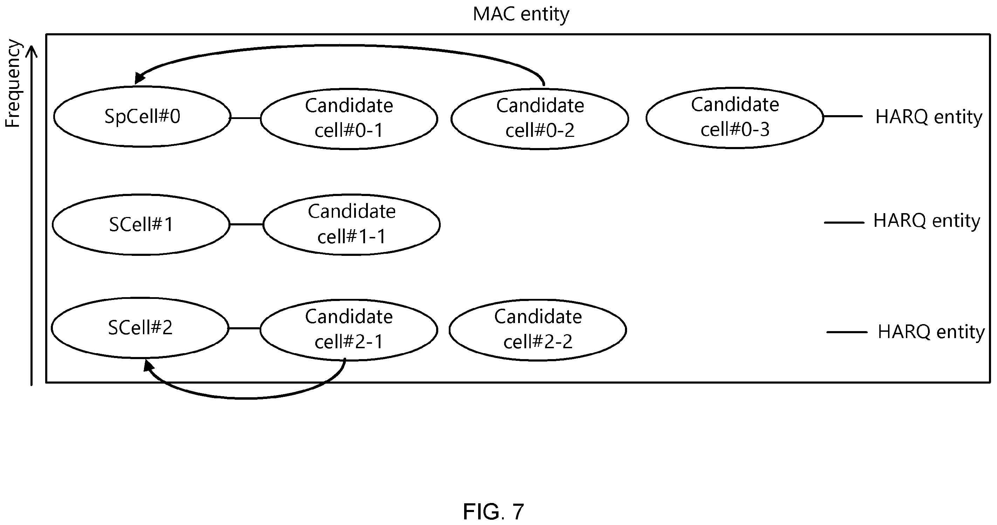

FIG. 7 is a diagram showing a serving cell switch example 1. For example, in the serving cell SpCell #0 of the MCG/SCG, when a serving cell change to the candidate cell #0-2 is instructed by L1/L2 signaling, the candidate cell #0-2 becomes the new serving cell SpCell #0. Also, for example, in the serving cell SCell #2 of the MCG/SCG, when a serving cell change to the candidate cell #2-1 is instructed by L1/L2 signaling, the candidate cell #2-1 becomes the new serving cell SCell #2.

### [Serving Cell Switch Example 2]

The RRC/MAC CE can configure a global candidate cell ID (cell #0, ..., 5) for each cell group, band, FR, and UE. The UE may be instructed to switch serving cells by the global candidate cell ID.

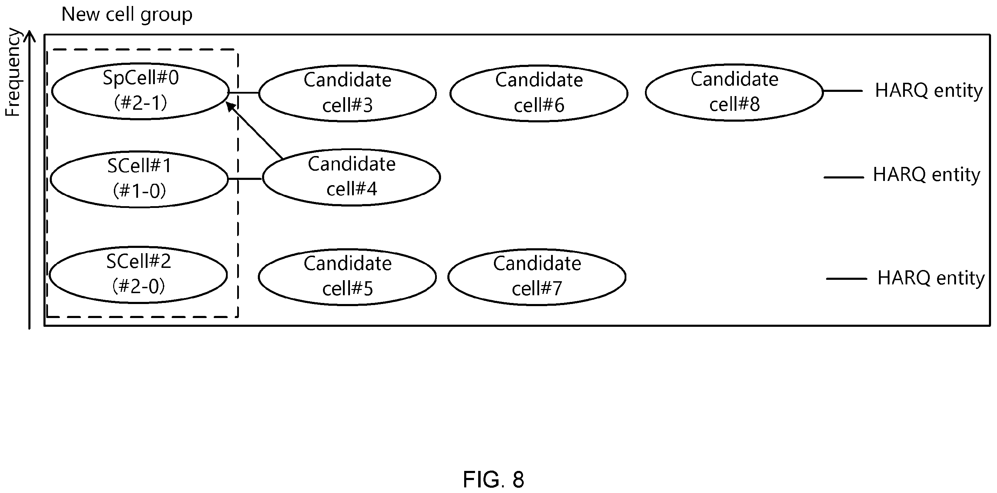

FIG. 8 shows a serving cell switch example 2. As in FIG. 6A, a pool of a plurality of candidate cells can be configured, and the serving cell can be switched to any (activated) candidate cell in the pool by L1/L2 signaling. In this case, the configured candidate cells can be either SpCell or Sell based on L1/L2 signaling.

The UE may receive an instruction of a serving cell change (from the cell #2-1 to the candidate cell #4) by MAC CE/DCI. Then, the indicated candidate cell #4 becomes the SpCell of the new cell group.

### [Serving Cell Switch Example 3]

The RRC/MAC CE can configure a global candidate cell ID (cells #0-1, #0-1, ..., 2-2) for each cell group, band, FR, and UE. The UE may be instructed to switch the serving cell by the global candidate cell ID.

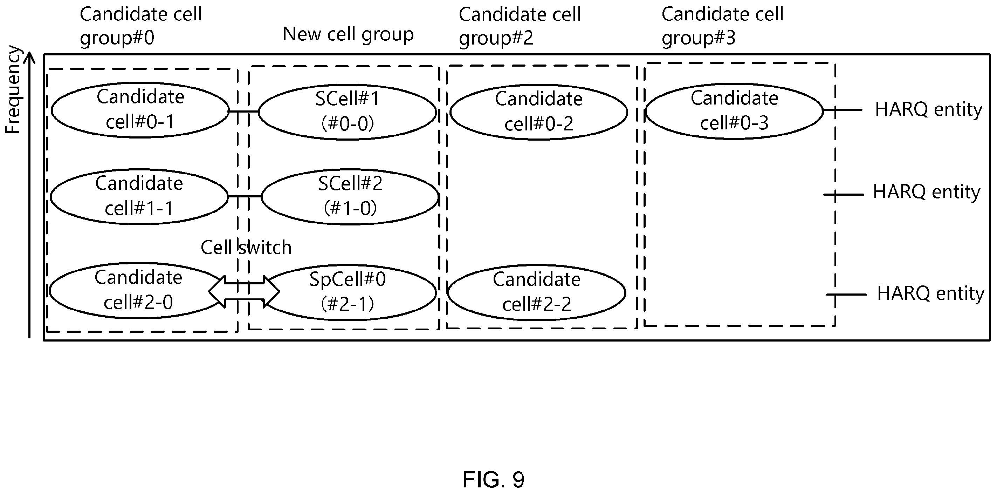

FIG. 9 is a diagram showing a serving cell switch example 3. The UE receives an instruction to change the serving cell (from the cell #2-0 to the cell #2-1) by MAC CE/DCI. Then, the indicated cell #2-1 becomes the SpCell of the new cell group. Also, the cells (the cells #0-0 and #1-0) of the same cell group as the indicated cell #2-1 become SCell #1 and SCell #2. That is, the serving cell group is switched.

### (CSI Report Configuration)

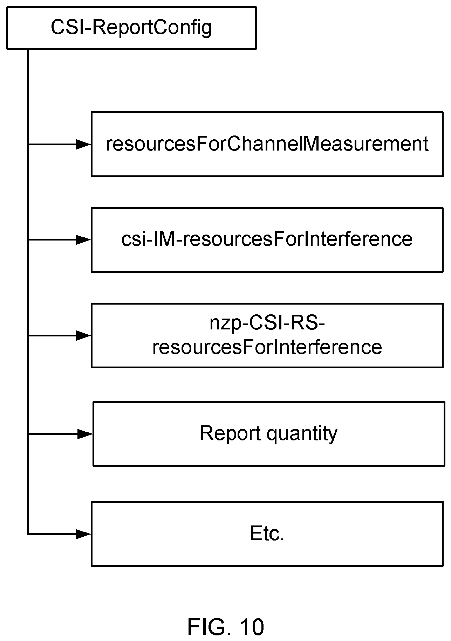

FIG. 10 is a diagram showing an overview of CSI report configuration of the RRC. FIG. 10 shows the CSI report configuration of the RRC in 3GPP Rel. 17. As shown in FIG. 10, the CSI report configuration (CSI-ReportConfig) includes "resourcesForChannelMeasurement", "csi-IM-resourcesForInterference", "nzp-CSI-RS-resourcesForInterference", "Report quantity", and the like. resourcesForChannelMeasurement", "csi-IM-resourcesForInterference", and "nzp -CSI-RS-resourcesForInterference" correspond to the CSI resource configuration "CSI-ResourceConfig".

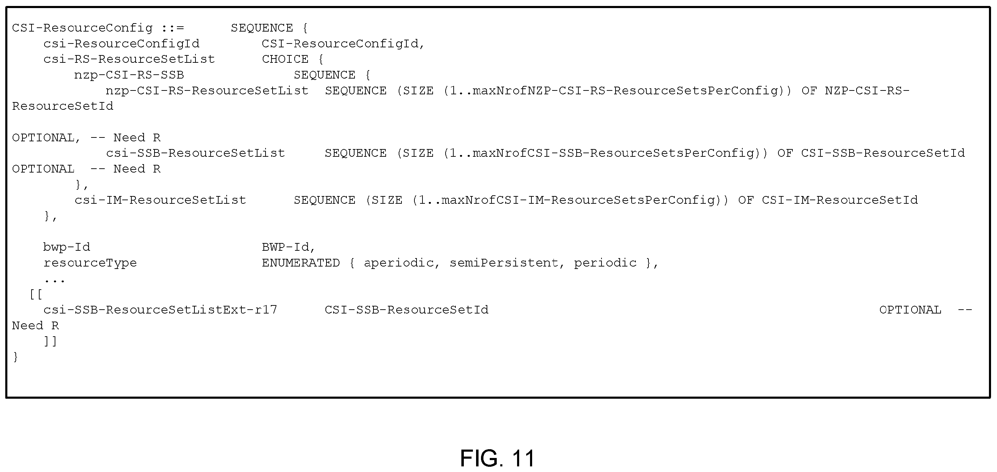

FIG. 11 is a diagram showing a part of the CSI resource configuration of Rel. 17. As shown in FIG. 11, the CSI resource configuration (CSI-ResourceConfig) includes "csi-SSB-ResourceSetList". "csi-SSB-ResourceSetList" is a reference list of SSB resources for use in CSI measurement and reporting in the CSI-RS resource set. "csi-SSB-ResourceSetListExt-r17" is used to add an element to "csi-SSB-ResourceSetList" if the number of reported groups (nrofReportedGroups-r17) is configured in the CSI report configuration.

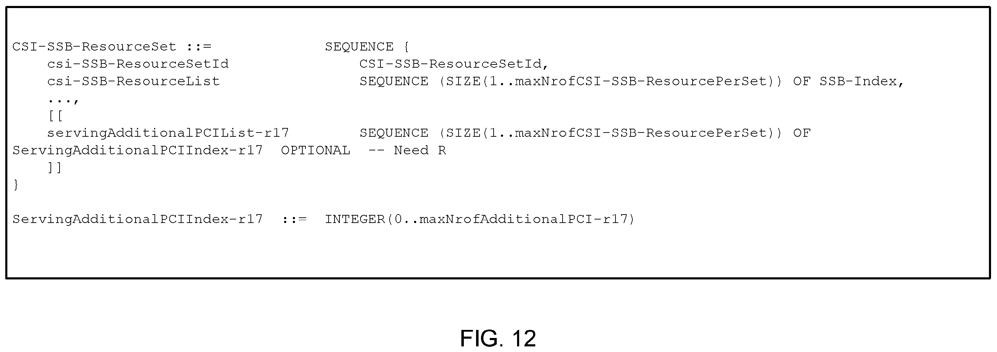

FIG. 12 shows a part of the CSI-SSB resource set of Rel. 17. As shown in FIG. 12, the CSI-SSB-Resource Set (CSI-SSB-ResourceSet) includes "servingAdditionalPCIList-r17". "servingAdditionalPCIList-r17" indicates the physical cell IDs (PCIs) of the SSBs included in the csi-SSB-ResourceList. If this parameter is present, the list has the same number of entries as the csi-SSB-ResourceList. The first entry in this list indicates the PCI value for the first entry in the csi-SSB-ResourceList, the second entry in this list indicates the PCI value for the second entry in the csi-SSB-ResourceList, and so on.

For each entry, if the value is zero, the PCI is the PCI of the serving cell in which this CSI-SSB-ResourceSet is defined. If this is not the case (if the value of each entry is non-zero), the value of each entry is the additionalPCIIndex-r17 of SSB-MTC-AdditionalPCI-r17 in the additionalPCIList-r17 of the serving cell configuration (ServingCellConfig), and the PCI is the additionalPCI-r17 of the SSB-MTC-AdditionalPCI-r17.

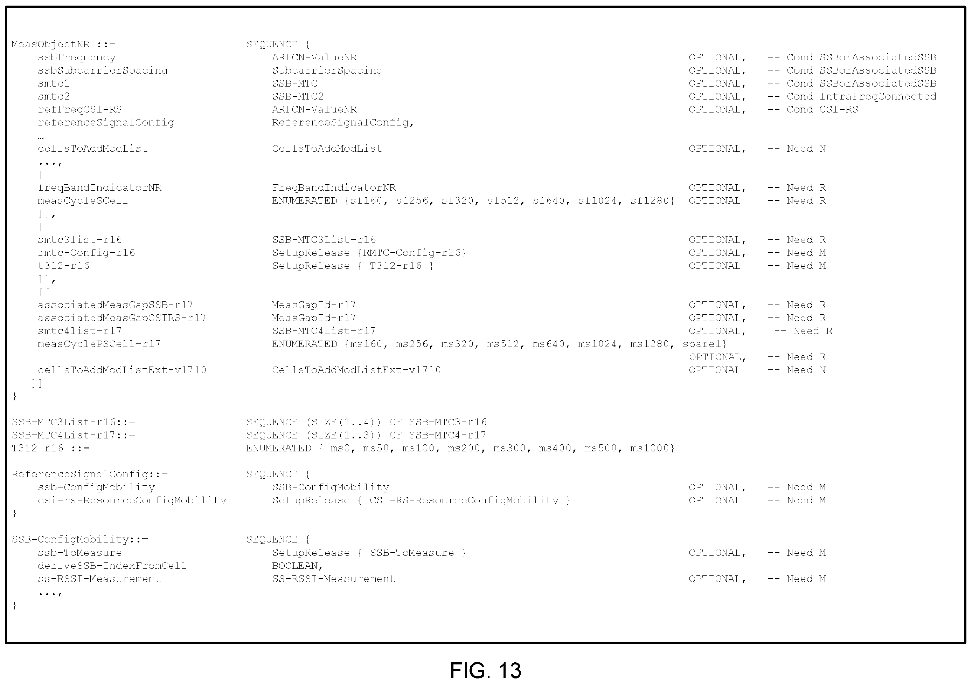

FIG. 13 is a diagram showing the configuration for L3 measurement/reporting in Rel. 17. associatedMeasGapSSB-r17 indicates the associated measurement gap for SSB measurement identified in ssb-ConfigMobility of the measurement object. In configuring a plurality of MeasObjectNRs with the same SSB frequency, the network sets the same measurement gap ID in this field for each MeasObjectNR. If this field is not present, the associated measurement gap is the gap configured via gapFR1, gapFR2, or gapUE.

associatedMeasGapCSIRS-r17 indicates the associated measurement gap for the CSI-RS measurement identified in the measurement object csi-rs-ResourceConfigMobility. In the absence of this field, the associated measurement gap is the gap configured via gapFR1, gapFR2, or gapUE.

### <Enhancement of L1 Measurement Report for L1/L2 Inter-Cell Mobility>

When the RSs (mainly SSBs) of the serving cell and the non-serving cell are configured in the same CSI report configuration (or in the same CSI resource configuration), the UE may report some additional indices indicating the serving cell/non-serving cell in addition to the conventional report contents.

If new RRC parameters are configured, the UE may report L3-RSRP values (per beam/cell/multi-beam) in addition to SSB indices/CRI and L1-RSRP/L1-SINR values.

### <Event Trigger L1 Beam Report for L1/L2 Inter-Cell Mobility>

An aperiodic L1 beam report may be triggered by reusing one or more existing events for RRM in TS38.331. One or more new/separate events may be defined to trigger an aperiodic L1 beam report. An L1 beam report may be triggered by any combination of two or more events. The event may be any of the following events A2 to A6 and I1. In the events A2 to A6, the measurement result may be at least one measurement result of RSRP (L1-RSRP/L3-RSRP), RSRQ, and SINR (RS-SINR).

Event A2: The measurement result of the serving cell is worse than a threshold.

Event A3: The measurement result of the neighboring cell (a value obtained by adding an offset to the measurement result) is better than the measurement result of the SpCell (a value obtained by adding an offset to the measurement result).

Event A4: The measurement result of the neighboring cell (a value obtained by adding an offset to the measurement result) is better than a threshold.

Event A5: The measurement result of the SpCell is worse than a first threshold, and the measurement result of the neighboring cell (a value obtained by adding an offset to the measurement result) is better than a second threshold.

Event A6: The measurement result of the neighboring cell (a value obtained by adding an offset to the measurement result) is better than the measurement result of the serving cell (Secondary Cell (SCell)) (a value obtained by adding an offset to the measurement result).

Event I1: The measurement result of the interference is higher than a threshold.

### (Analysis)

As described above, when multi-TRP is applied, the serving cell may be switched to a cell (additional cell) with a PCI different from that of the serving cell by signaling of at least one of layer 1 and layer 2 (L1/L2 inter-cell mobility (layer 1/layer 2 inter-cell mobility)).

However, when the frequencies of the PCIs are different, it is not clear how the configurations for CSI measurement and reporting (for example, L1-RSRP, L1-SINR measurement and reporting) of each frequency are set up, and how the measurement and reporting are performed. If the measurement and reporting of a plurality of frequencies are not performed appropriately, there may occur a problem of a decrease in communication throughput.

In view of this, the inventors of the present invention have conceived a terminal, a radio communication method, and a base station that allow measurement and reporting to be performed appropriately at a plurality of frequencies.

Hereinafter, embodiments of the present disclosure will be described in detail with reference to the drawings. Radio communication methods according to the embodiments may be applied independently or in combination.

In the present disclosure, "A/B" and "at least one of A and B" may be read interchangeably. Also, in the present disclosure, "A/B/C" may mean "at least one of A, B, and C."

In the present disclosure, the terms notify, activate, deactivate, instruct (or indicate), select, configure, update, determine, and the like may be read interchangeably. In the present disclosure, the terms support, control, can control, operate, can operate, and the like may be read interchangeably.

In the present disclosure, the terms Radio Resource Control (RRC), RRC parameter, RRC message, higher-layer parameter, field, information element (IE), configuration, and the like may be read interchangeably. In the present disclosure, the terms Medium Access Control (MAC) Control Element (CE), update command, activation/deactivation command, and the like may be read interchangeably.

In the present disclosure, higher layer signaling may be any one of Radio Resource Control (RRC) signaling, Medium Access Control (MAC) signaling, broadcast information, and the like, or a combination of these, for example.

In the present disclosure, MAC signaling may use a MAC Control Element (MAC CE), a MAC Protocol Data Unit (PDU), and the like. The broadcast information may be a Master Information Block (MIB), a System Information Block (SIB), Remaining Minimum System Information (RMSI), Other System Information (OSI), or the like, for example.

In the present disclosure, the physical layer signaling may be Downlink Control Information (DCI), Uplink Control Information (UCI), or the like, for example.

In the present disclosure, the terms index, identifier (ID), indicator, resource ID, and the like may be read interchangeably. In the present disclosure, the terms sequence, list, set, group, family, cluster, subset, and the like may be read interchangeably.

In the present disclosure, the terms panel, UE panel, panel group, beam, beam group, precoder, Uplink (UL) transmission entity, Transmission/Reception Point (TRP), base station, Spatial Relation Information (SRI), spatial relation, SRS Resource Indicator (SRI), and Control Resource Set (COntrol REsource SET (CORESET)), Physical Downlink Shared Channel (PDSCH), Codeword (CW), Transport Block (TB), Reference Signal (RS), antenna port (for example, DeModulation Reference Signal (DMRS) port), antenna port group (for example, DMRS port group), group (for example, spatial relation group), Code Division Multiplexing (CDM) group, reference signal group, CORESET group, Physical Uplink Control Channel (PUCCH) group, PUCCH resource group, resource (for example, reference signal resource, SRS resource), resource set (for example, reference signal resource set), CORESET pool, downlink Transmission Configuration Indication state (TCI state) (DL TCI state), uplink TCI state (UL TCI state), unified TCI state, common TCI state, Quasi-Co-Location (QCL), QCL assumption, and the like may be read interchangeably.

The terms spatial relationship information identifier (ID) (TCI state ID) and spatial relationship information (TCI state) may be read interchangeably. The "spatial relationship information" may be read interchangeably with " spatial relationship information set", "one or more pieces of spatial relationship information", and the like. The terms TCI state and TCI may be read interchangeably.

In the present disclosure, the terms cell group, serving cell group, master cell group (MCG), and secondary cell group (SCG) may be read interchangeably. The terms L1/L2, L1/L2 signaling and DCI/MAC CE may be read interchangeably. The serving cell may be replaced with a cell that transmits a PDSCH. The candidate cell may mean a cell that is a candidate to become a serving cell by L1/L2 inter-cell mobility.

In the present disclosure, the terms cell, PCI, serving cell, source serving cell, CC, BWP, BWP in CC, and band may be read interchangeably. In the present disclosure, the terms additional cell, other cell, non-serving cell, cell with a different PCI, candidate cell, candidate serving cell, cell with a PCI different from PCI of current serving cell, another serving cell, and target cell may be read interchangeably. In the present disclosure, the terms switch, change, and update may be read interchangeably. The term serving cell may be read interchangeably with the term serving cell before switch or serving cell after switch.

In the present disclosure, the terms beam measurement/report, L1 beam measurement/report, L1 measurement/report, and CSI measurement/report may be read interchangeably. L1 may indicate at least one of L1-RSRP and L1-SINR. RS may be at least one of CSI-RS and SSB. The terms L1-RSRP and L1-SINR may be read interchangeably. The terms SSB, SSB index, and SSBRI may be read interchangeably.

### (Radio Communication Method)

### <Analysis 1>

In inter-cell mobility, it is preferable to support L1 beam measurement at a plurality of frequencies (inter-frequency measurement) in order to support switching of SpCell/SCell to a candidate cell at any frequency. However, L1 beam measurement/reporting by the existing CSI report configuration supports only the configuration of RS of the same frequency as the serving cell.

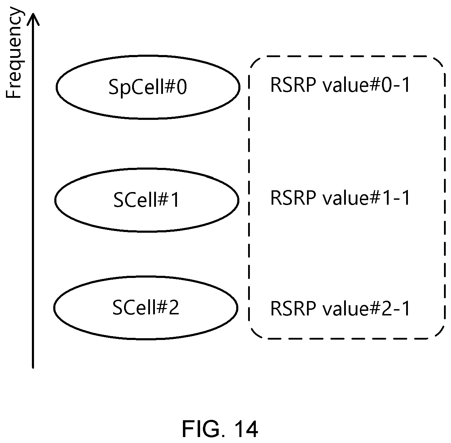

FIG. 14 is a diagram showing an example of RSRP values of a plurality of frequencies. FIG. 14 shows that different RSRP values (RSRP values #0-1, 1-1, and 2-1) are measured for cells of different frequencies (SpCell #0, SCell #1, and SCell #2). In this case, it is not clear how the configurations for L1 beam measurement/reporting are set up and how the measurement/reporting are performed. In view of this, the inventors of the present invention have conceived a method of L1 beam measurement/reporting at one or more frequencies.

### <First Embodiment>

For the present embodiment, an extension of the L1 measurement/report configurations will be described in order to support frequency configuration for L1 beam measurement (CSI measurement) using a reference signal (RS) (SSB/CSI-RS). For example, the UE may receive at least one of channel state information (CSI) report configuration and CSI resource configuration indicating one or more frequencies, and may control CSI measurement and CSI report using a reference signal (RS) of the one or more frequencies.

### [Option 1]

At least one of the CSI report configuration (CSI-ReportConfig) and the CSI resource configuration (CSI-ResourceConfig) may include a frequency configuration (for example, an absolute radio-frequency channel number (ARFCN)-ValueNR) corresponding to a reference signal for measurement (for example, SSB/CSI-RS). ARFCN-ValueNR is used to indicate the ARFCN that applies to a downlink, uplink or bidirectional (TDD) NR global frequency raster. Each CSI report configuration/CSI resource configuration corresponds to one frequency. A plurality of CSI report configurations is required to support L1 beam measurement/report at a plurality of frequencies. If no ARFCN-ValueNR is present in the CSI report configuration, it may mean that it is the same frequency as the current serving cell configuration.

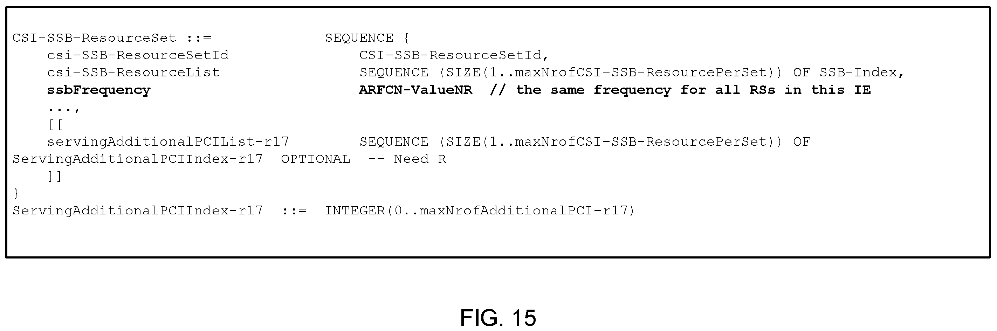

FIG. 15 is a diagram showing an example of CSI-SSB-ResourceSet in option 1 of the first embodiment. CSI-SSB-ResourceSet is included in the CSI report configuration and the CSI resource configuration. In FIG. 15, the SSB frequency configuration (ssbFrequency) corresponding to the ARFCN-ValueNR is included.

### [Option 2]

At least one of the CSI report configuration and the CSI resource configuration may support configuration of a different frequency (for example, ARFCN-ValueNR) for each SSB/CSI-RS/PCI. Each CSI resource configuration/each CSI report configuration may support L1 beam measurement/reporting at a plurality of frequencies. In this case, since the comparison of RSRP is an intra-frequency comparison, it is necessary to enhance the beam report quantity configuration and beam selection rule. Comparison between frequencies is usually performed based on SINR/RSRQ. SINR/RSRQ will be explained in the second embodiment described later.

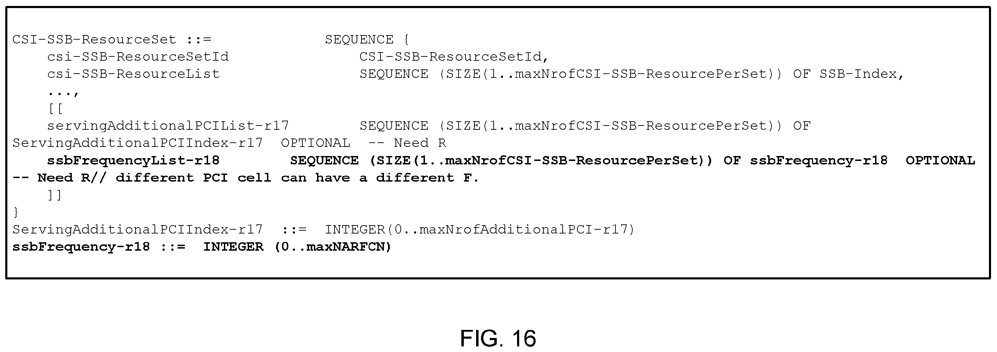

FIG. 16 is a diagram showing an example of CSI-SSB-ResourceSet in option 2 of the first embodiment. CSI-SSB-ResourceSet is included in the CSI report configuration and the CSI resource configuration. In FIG. 16, a list of SSB frequencies (ssbFrequencyList-r18) and a of SSB frequency configuration (ssbFrequency) are included.

The frequency for use in beam measurement/reporting may be configured/indicated by MAC CE/DCI. For example, a list of frequencies may be configured by RRC (CSI report configuration/CSI resource configuration), and one or more of the frequencies in the list may be configured/indicated by MAC CE/DCI. The plurality of frequencies may be frequencies of the serving cell and candidate cell.

According to the present embodiment, one or more frequencies for use in beam measurement/reporting can be configured appropriately.

### <Second Embodiment>

For a second embodiment, a case will be described in which a CSI resource configuration/CSI report configuration supports L1 beam (CSI) measurement/reporting at a plurality of frequencies. A UE receives a configuration/instruction indicating an RS (SSB/CSI-RS) to be received at the plurality of frequencies in the CSI resource configuration/CSI report configuration, and uses the RS to perform CSI (L1-RSRP/L1-SINR) measurement and reporting.

The UE may control (may transmit) the transmission of one CSI report that includes both Reference Signal Received Power of layer 1 (L1-RSRP) and a Signal to Interference plus Noise Ratio of layer 1 (L1-SINR). The UE may control (may transmit) the transmission of one CSI report that includes CSI (L1-RSRP/L1-SINR) measurement results at a plurality of frequencies.

The UE may configure quantity for both L1-RSRP and L1-SINR in order to report both L1-RSRP and L1-SINR for a beam index. The beam with the largest L1-RSRP and L1-SINR may be placed at the top of the beam report or may be specified explicitly. Differential quantization may be performed on the L1-RSRP and L1-SINR values. To select a beam for reporting, the UE may compare the L1-RSRPs of the individual frequencies.

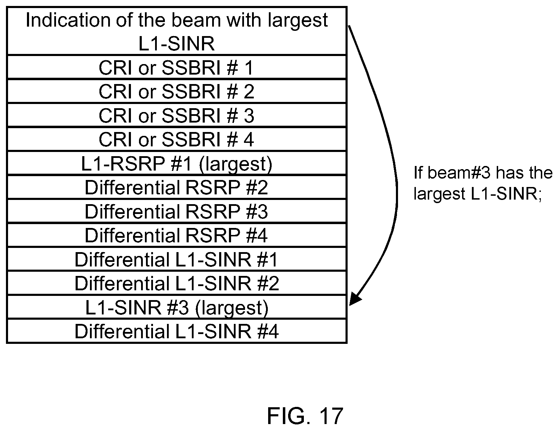

FIG. 17 is a diagram showing an example of a CSI report according to the second embodiment. In the example of FIG. 17, the CSI report includes the largest absolute value of L1-RSRP (L1-RSRP #1) and the differential values from the absolute value (Differential RSRP #2, #3, and #4). The CSI report also includes the largest absolute value of L1-SINR (L1-SINR # 3) and the differential values from the absolute value (Differential RSRP #1, #2, and #4). The CSI report further includes, at the beginning (first line), an indication of the beam with the largest L1-SINR. In this example, beam #3 is indicated as the beam with the largest L1-SINR.

In the case of measuring RSs at a plurality of frequencies and selecting a beam to report, the UE may first compare L1-RSRPs of the same frequency and then compare L1-SINRs of different frequencies. Alternatively, the UE may first compare L1-SINRs of different frequencies and then compare L1-RSRPs of the same frequency.

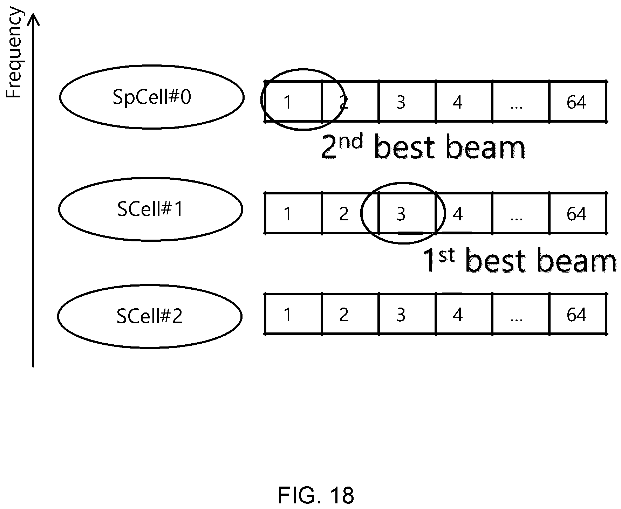

FIG. 18 is a diagram showing an example of beam reporting at a plurality of frequencies. In the example of FIG. 18, beam reporting is performed for cells of different frequencies (SpCell #0, SCell #1, and SCell #2). In this example, since there are 64 beams (SSBs) per cell, the UE measures the L1-RSRPs and L1-SINRs of 64 × 3 beams. In this example, the L1-RSRP of SSB #3 of the SCell #1 is the highest, and the L1-RSRP of SSB #1 of the SpCell #0 is the next highest. The UE reports the absolute value of L1-RSRP of SSB #3 of the SCell #1 and the differential value of L1-RSRP of SSB #1 of the SpCell #0.

For the RS/Cell configured in the CSI report configuration, for example, in the SpCell, all candidate cells for the serving cell switch may be configured in the CSI report configuration at the time of L1 measurement. Then, the NW (base station) may determine whether to perform a cell switch based on the L1 measurement and report results.

The CSI report may include information indicating the frequency or PCI with which the RS as the L1-RSRP/L1-SINR measurement target was transmitted.

According to the present embodiment, in one CSI report, both L1-RSRP and L1-SINR can be reported. Also, in one CSI report, CSI CSI measurement results (L1-RSRP/L1-SINR) at a plurality of frequencies can be reported. Since interference differs depending on the frequency (CC), the L1-SINR has a different value. According to the present embodiment, since L1-SINRs of different frequencies can be reported, the NW can grasp the L1-SINR of a switch candidate cell, for example.

When the first/second embodiment is used for inter-cell L1 measurement/report configuration, STMC and MG configurations for frequency, PCI, PCI specific RS, UE and CSI resource configuration may be added to the CSI report configuration.

### <Third Embodiment>

A UE may receive configuration information for layer 3 (L3) measurement/reporting, including configuration for beam (CSI) measurement/reporting by a layer 1 (L1) reference signal (SSB/CSI-RS). The UE may then control L1 and L3 measurement/reporting based on the configuration information. For example, as shown in FIG. 13, MeasObjectNR, which is configuration information related to L3 measurement/reporting, may include a frequency configuration for RRM measurement (for example, ARFCN-ValueNR).

### [Option 1]

Configuration information for L3 measurement/reporting (MeasObjectNR) may include an indication of whether it is for conventional L3 RRM measurement or for L1 beam measurement. If L1 beam measurement is indicated, the configuration information may further include some configuration for L1 measurement/reporting (for example, report quantity) in the CSI report configuration.

### [Option 2]

Configuration information (MeasObjectNR) for one L3 measurement/report may include a plurality of frequencies and PCI/RS configurations corresponding to different frequencies for L1 beam measurement/report. L1 measurement results and L3 measurement results may be configured to be reported in separate CSI reports or may be configured to be reported in one CSI report.

### [CSI Report]

The UE may report L3 measurement results (L3-RSRP value per beam/cell/multi-beam) in an inter-frequency (multi-frequency) L1 beam report (CSI report). Alternatively, the UE may report L1 measurement results in a report of L3 measurement results. The UE may report L1 measurement results in an RRC IE or MAC CE.

The inter-frequency (multi-frequency) L1 measurement/reporting may be configured as an event trigger. For example, when a specific event occurs, the UE may perform the inter-frequency (multi-frequency) L1 measurement/reporting.

As a variation, the UE may receive configuration information for beam measurement/reporting via SSB/CSI-RS of L1 (CSI report configuration/CSI resource configuration), including configuration for measurement/reporting of layer 3 (L3).

According to the present embodiment, it is possible to set up the configurations of layers 1 and 3 together, thereby to suppress the signaling overhead. When the present embodiment is used for the configuration of inter-cell L1 measurement/report, the configurations of STMC and MG for L3 measurement of MeasObjectNR can be reused for L1 measurement.

### <Analysis 2>

To support L1 inter-frequency measurements for inter-cell mobility, the following cases need to be considered.

### [Case 1]

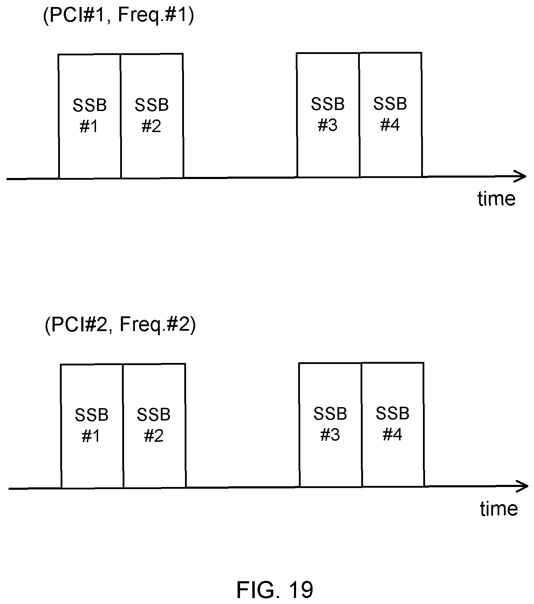

The UE antenna cannot support L1 measurement at different frequencies at the same time (FIG. 19). The UE antenna can perform L1 measurement at one frequency at a time. Note that Freq. in FIG. 19 means Frequency. The same applies to other drawings.

### [Case 2]

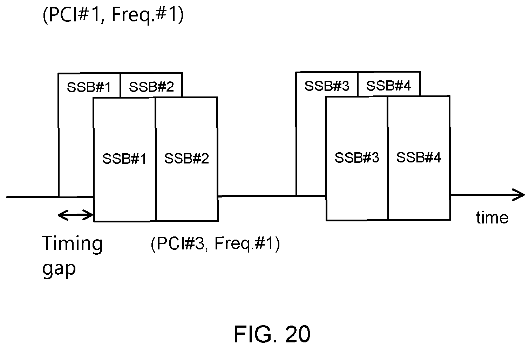

The RSs from cells with different PCIs (either the same or different frequencies) for L1 measurement are not synchronized (FIG. 20). As in the example of FIG. 20, there may be a timing gap between SSBs of cells with different PCIs.

### [Case 3]

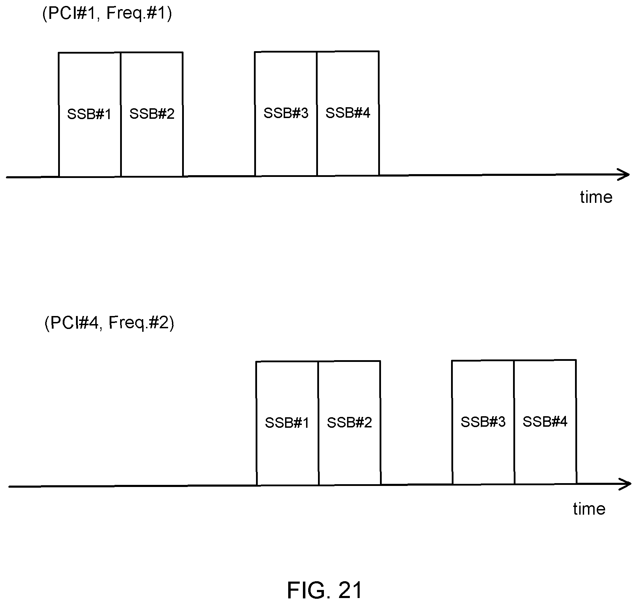

The RSs from cells with different PCIs (either same or different frequencies) for L1 measurement are not aligned (FIG. 21) (for example, different SSB configurations). As in FIG. 21, the timings of SSBs of cells with different PCIs may be different.

### <Measurement Requirement and Scheduling Restrictions for L1 Measurement>

### [Measurement Report Requirement]

The UE shall send L1-RSRP reports only for the report configuration configured for the active BWP.

### [Measurement Restrictions of CSI-RS and SSB in L1-RSRP Measurement]

The UE is required to be able to measure SSB and CSI-RS of L1-RSRP without measurement gaps. The UE is required to perform SSB and CSI-RS measurements with certain measurement restrictions.

### [Scheduling Restrictions for UE Performing L1-RSRP Measurement in FR2]

If the RS for L1-RSRP measurement meets certain conditions, such as being a CSI-RS that is subjected to QCL in the active TCI state of the PDCCH/PDSCH and is not repeatedly ON in the CSI-RS resource set, there may be no scheduling restrictions due to the L1-RSRP measurement based on the CSI-RS.

If the above specific conditions are satisfied and if, in a non-HST scenario, the reference symbol to be measured in FR2-1 or L1-RSRP is not 480 kHz SCS or 960 kHz SCS in FR2-2, the UE does not expect to transmit PUCCH/PUSCH/SRS or receive CQI of PDCCH/PDSCH/tracking/CSI-RS in at least one of the following symbols (1) to (4):
(1) Symbol corresponding to the SSB index configured for L1-RSRP measurement.
(2) Symbol corresponding to periodic CSI-RS resources configured for L1-RSRP measurement.
(3) Symbol corresponding to semi-persistent CSI-RS resources configured for L1-RSRP measurement when the resources are activated.
(4) Symbol corresponding to aperiodic CSI-RS resources configured for L1-RSRP measurement when the report is triggered.

### <Fourth Embodiment>

Regarding L1 measurement/reporting for inter-cell mobility, at least one of UE capabilities (1) to (5) below may be introduced. The processing in the present disclosure may be applied only to UEs that have reported the following UE capabilities or that support the specific UE capabilities.
(1) Supporting simultaneous L1 measurements with physical cell IDs (PCIs) of different frequencies. If supported, the UE may report at least one of the supported frequency numbers and PCI numbers.
(2) Supporting L1 measurements with asynchronous PCIs of the same/different frequencies. If supported, the UE may report at least one of maximum asynchronous timing difference/gap, and PCI numbers.
(3) Supporting L1 measurements with PCIs for which asynchronous SSBs of the same/different frequencies are configured. If supported, the UE may report at least one of the maximum number of SSB configurations and the PCI numbers.
(4) Supporting L1 measurement of synchronous and aligned SSB configurations with PCIs of the same/different frequencies. If supported, the UE may report at least one of the PCI numbers and frequency numbers. This may be the default UE capability for inter-cell mobility L1 measurement/reporting in Rel. 18.
(5) For FR2, supporting L1 measurement of different QCLTypeD beams from different PCIs of the same/different frequencies. This allows a multi-panel UE to be supported and allows each UE panel to measure the beam.

### <Fifth Embodiment>

The UE may receive a configuration of a Measurement Timing Window (MTW) for L1 measurement corresponding to a specific frequency, a specific PCI, and a specific RS (for example, an RS from a specific PCI), and perform L1 (L1-RSRP/L1-SINR) measurement/reporting based on the configuration. For at least one L1 measurement at different (a plurality of) frequencies and with different (a plurality of) PCI/RSs, a different MTW may be set for each frequency/PCI/RS. The MTW configuration may include a periodicity and offset (periodicityAndOffset) and a duration, and may be similar to the configuration of SMTC/SSB-MTC/MG. The UE may perform layer 1 (L1-RSRP/L1-SINR) measurements during the MTW duration.

The UE may receive a configuration of a different measurement gap (MG) for each of a plurality of frequencies/PCI/RSs for L1 measurements of the plurality of frequencies/PCI/RSs. The MTW indicates the timing for measuring SSB/CSI-RS. The UE can transmit and receive data at the current frequency during the MTW. The UE adjusts the antenna to measure (detect) L1 signals transmitted using a frequency different from the frequency used by the connected cell during the MG. Basically, the UE cannot transmit or receive data at the current frequency during the MG.

For UEs that do not support simultaneous measurements at a plurality of frequencies, the UE may be configured with nonoverlapping MTWs for RS/PCIs of different frequencies. Alternatively, the UE may be configured with measurement gaps (MG) for intra-frequency/inter-frequency measurements.

UE capabilities may be introduced that indicate supporting simultaneous measurements at a plurality of frequencies (and frequency numbers) and supporting the same MTW/MG of a plurality of frequencies. For a UE with such capabilities, the UE may be configured with the same MTW/MG of a plurality of frequencies and/or a plurality of PCIs.

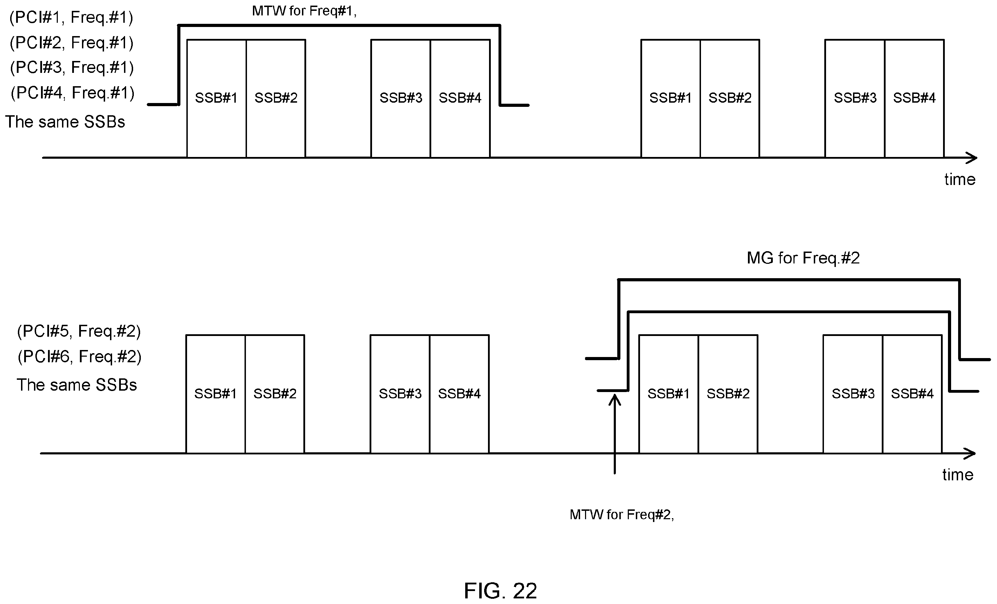

FIG. 22 is a diagram showing an example of MTW and MG in the fifth embodiment. In the example of FIG. 22, the UE measures SSB in the MTW of a first frequency (Freq. #1), and after a certain period, measures SSB in the MTW of a second frequency (Freq. #2). The MTW of the first frequency has a period of 40 ms, an offset of 0 ms, and a duration of 5 ms, for example. The MTW of the second frequency has a period of 40 ms, an offset of 20 ms, and a duration of 5 ms, for example. The duration of the MG of the second frequency includes the duration of the MTW of the second frequency.

For non-aligned SSB cells of the same/different frequencies, the UE may be configured with different MTW/MGs for different RS/PCIs. In addition, the following options 1 to 3 may be applied.

### <<Option 1>>

The UE does not expect overlapping of MTW/MGs for different RS/PCIs (the MTW/MG do not overlap).

### <<Option 2>>

The MTW/MGs for different RS/PCIs are allowed to overlap. For example, one MTW/MG may be a subset of another MTW/MG.

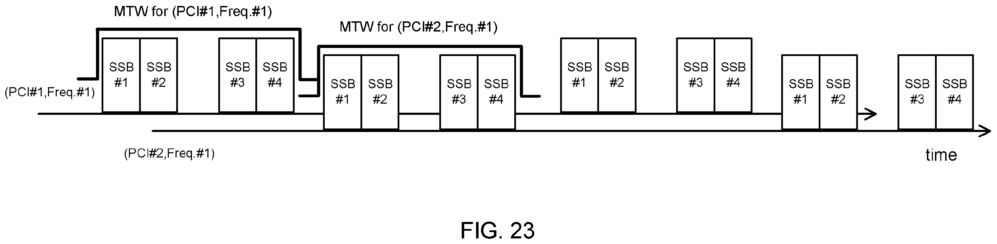

FIG. 23 is a diagram showing an example of option 2 of the fifth embodiment. In FIG. 23, the durations of MTW (for PCI #1, Freq. #1) and MTW (for PCI #2, Freq. #1) overlap each other.

### <<Option 3>>

A single MTW/MG with one periodicity is configured for different RS/PCIs. However, the MTW/MG can have a plurality of offsets and/or a plurality of durations.

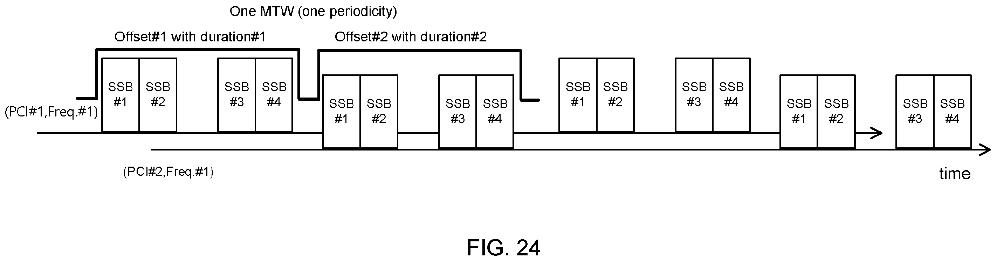

FIG. 24 is a diagram showing an example of option 3 of the fifth embodiment. In FIG. 24, one MTW is used for the SSB of PCI #1, Freq. #1 and the SSB of PCI #2, Freq. #1. However, the duration and offset for measuring the SSB of PCI #1 are different from the duration and offset for measuring the SSB of PCI #2.

In the case of asynchronous cells of the same/different frequencies, for the RS of the cell of each PCI, the UE may be configured with a timing difference compared to the reference PCI to indicate the timing gap for RS from different PCIs. For example, in the example of FIG. 20, the timing gap of PCI #3 compared to the PCI #1 that is the reference PCI is configured, and the UE determines the timing for measurement of the SSB of PCI #3 based on the timing gap.

During the indicated timing gap, the UE does not expect to receive/transmit with the current serving cell/frequency. For such cases, scheduling restrictions may apply, such as "Measurement Requirement and Scheduling Restrictions for L1 Measurement" described above. The UE does not expect to transmit PUCCH/PUSCH/SRS or receive CSI-RS for PDCCH/PDSCH/tracking/CQI during the indicated timing gap.

According to the present embodiment, it is possible to appropriately configure the measurement timing window (MTW) and the measurement gap (MG) in performing L1 measurement/reporting at a plurality of frequencies.

### <Supplementary Notes>

### [Notification of Information to UE]

In the above-described embodiments, notification of any information (from a network (NW)) (for example, a base station (BS)) to a UE (in other words, reception of any information from the BS by the UE) may be provided using physical layer signaling (for example, DCI), higher layer signaling (for example, RRC signaling, MAC CE), a specific signal/channel (for example, PDCCH, PDSCH, reference signal), or a combination thereof.

If the notification is provided by a MAC CE, the MAC CE may be identified by including a new logical channel ID (LCID) that is not defined in existing standards, in the MAC sub-header.

If the notification is provided by a DCI, the notification may be made by a specific field of the DCI, a Radio Network Temporary Identifier (RNTI) used to scramble Cyclic Redundancy Check (CRC) bits assigned to the DCI, the format of the DCI, or the like.

Furthermore, the notification of any information to the UE in the above-described embodiments may be provided periodically, semi-persistently, or aperiodically.

### [Notification of Information from UE]

In the above-described embodiments, notification of any information from the UE (to the NW) (in other words, transmission/report of any information from the UE to the BS) may be provided using physical layer signaling (for example, UCI), higher layer signaling (for example, RRC signaling, MAC CE), a specific signal/channel (for example, PUCCH, PUSCH, PRACH, reference signal), or a combination thereof.

If the notification is provided by a MAC CE, the MAC CE may be identified by including a new LCID, that is not defined in existing standards, in the MAC sub-header.

If the notification is provided by a UCI, the notification may be transmitted using PUCCH or PUSCH.

Furthermore, the notification of any information from the UE in the above-described embodiments may be provided periodically, semi-persistently, or aperiodically.

### [Application of Each Embodiment]

At least one of the above-described embodiments may be applied when a specific condition is satisfied. The specific condition may be specified in a standard or may be notified to a UE/BS using higher layer signaling/physical layer signaling.

At least one of the above-described embodiments may be applied only to UEs that have reported or support a specific UE capability.

The specific UE capability may indicate supporting specific process/operation/control/information in at least one of the above-described embodiments.

Furthermore, the specific UE capability may be a capability that is applied across all frequencies (in common regardless of frequency), or may be a capability for each frequency (for example, one or a combination of a cell, a band, a band combination, a BWP, a component carrier, or the like), or may be a capability for each frequency range (for example, Frequency Range 1 (FR1), FR2, FR3, FR4, FR5, FR2-1, FR2-2), or may be a capability for each subcarrier spacing (SubCarrier Spacing (SCS)), or may be a capability for each Feature Set (FS) or Feature Set Per Component-carrier (FSPC).

The specific UE capability may be a capability that is applied across all duplex modes (in common regardless of the duplex mode), or may be a capability for each duplex mode (for example, Time Division Duplex (TDD), Frequency Division Duplex (FDD)).

At least one of the above-mentioned embodiments may be applied when the UE is configured/activated/triggered to have specific information related to the above-described embodiments (or to perform the operations in the above-described embodiments) by higher layer signaling/physical layer signaling. For example, the specific information may be any RRC parameters for a specific release (for example, Rel. 18/19) or the like.

If the UE does not support at least one of the specific UE capabilities or is not configured with the specific information, Rel. 15/16 operations may be applied, for example.

### (Supplementary Note)

Regarding one embodiment of the present disclosure, the following supplementary notes of the invention will be given.

### {Supplementary Note 1}

A terminal including:
a receiving section that receives at least one of a channel state information (CSI) report configuration and a CSI resource configuration indicating one or more frequencies; and
a control section that controls CSI measurement and CSI reporting using a reference signal at the one or more frequencies.

### {Supplementary Note 2}

The terminal according to supplementary note 1, wherein
the control section controls transmission of one CSI report including both Reference Signal Received Power of layer 1 (L1-RSRP) and a Signal to Interference plus Noise Ratio of layer 1 (L1-SINR).

### {Supplementary Note 3}

The terminal according to supplementary note 1 or 2, wherein
the control section controls transmission of one CSI report including CSI measurement results at a plurality of frequencies.

### {Supplementary Note 4}

The terminal according to any one of supplementary notes 1 to 3, wherein
the receiving section receives configuration information for layer 3 measurement, the configuration information including a configuration for CSI measurement using a reference signal of layer 1, and
the control section controls measurements and reporting of layer 1 and layer 3, based on the configuration information.

### (Supplementary Note)

Regarding one embodiment of the present disclosure, the following supplementary notes of the invention will be given.

### {Supplementary Note 1}

A terminal including:
a receiving section that receives a measurement timing window for measurement of layer 1 at a plurality of frequencies, the measurement timing window being different for each of the frequencies; and
a control section that controls the measurement of layer 1 during the measurement timing window.

### {Supplementary Note 2}

The terminal according to supplementary note 1, wherein
the receiving section receives a measurement gap for measurement of layer 1 at a plurality of frequencies, the measurement gap being different for each of the frequencies; and
the control section adjusts an antenna for the measurement of layer 1 in a period of the measurement gap.

### {Supplementary Note 3}

The terminal according to supplementary note 1 or 2, wherein
a transmitting section that transmits UE capability information indicating that the UE supports L1 measurement simultaneously in physical cell IDs (PCIs) of different frequencies.

### {Supplementary Note 4}

The terminal according to any one of supplementary notes 1 to 3, wherein
a transmitting section that transmits UE capability information indicating that the UE supports L1 measurement in asynchronous physical cell IDs (PCIs) of different frequencies.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

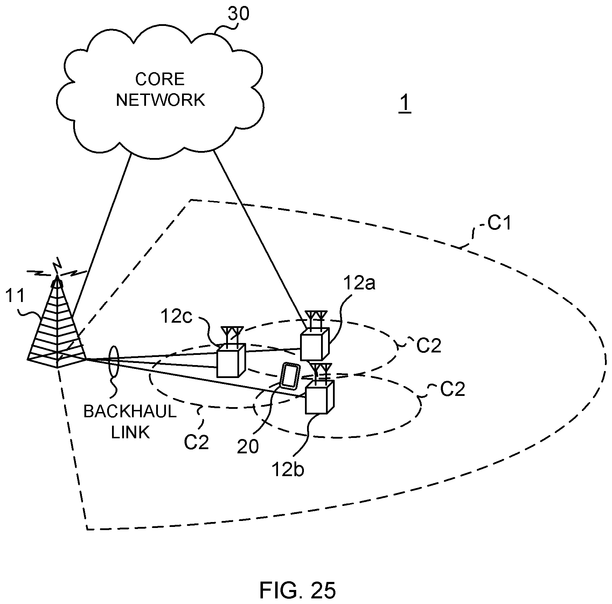

FIG. 25 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UFM), Application Function (AF), Data Network (DN), Location Management Function (LMF), and operation, administration and maintenance (management) (OAM), for example. Note that a plurality of functions may be provided by one network node. Communication with an external network (for example, the Internet) may be performed via DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

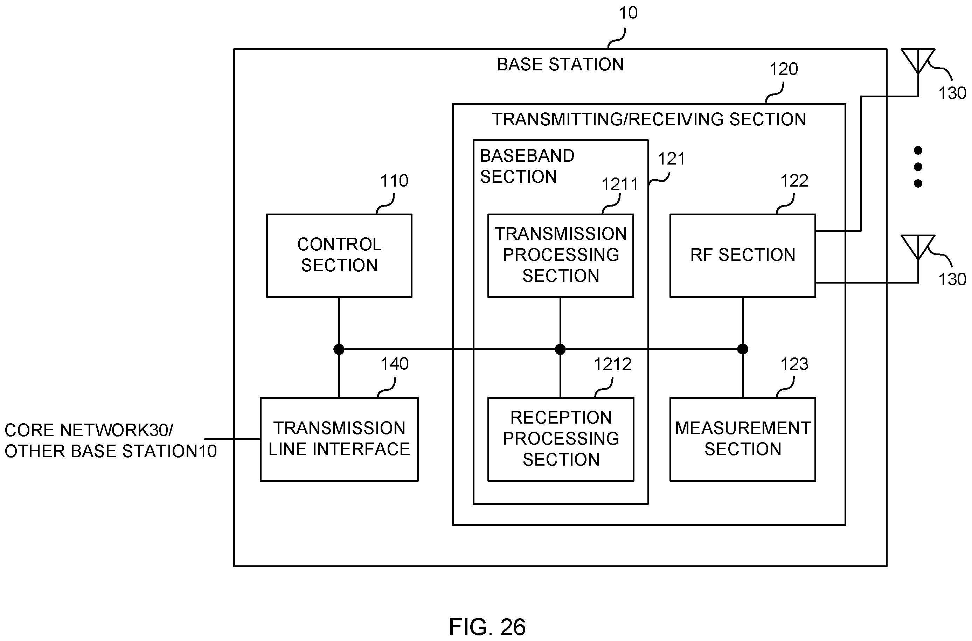

FIG. 26 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of a channel state information (CSI) report configuration and a CSI resource configuration indicating one or more frequencies.

The control section 110 may control reception of a CSI report using a reference signal at the one or more frequencies.

The transmitting/receiving section 120 may transmit a measurement timing window for measurement of layer 1 at a plurality of frequencies, the measurement timing window being different for each of the frequencies. The control section 110 may control reception of measurement results of the layer 1 during the measurement timing window.

### (User Terminal)

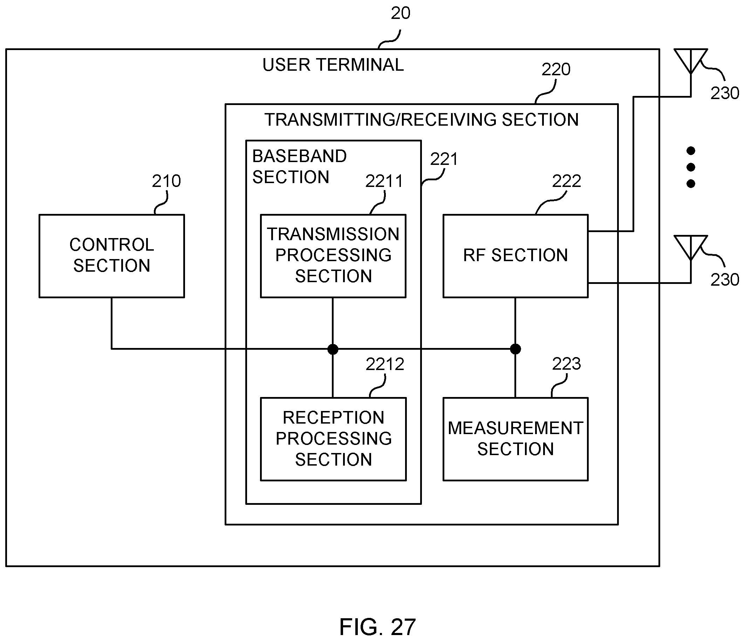

FIG. 27 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of a channel state information (CSI) report configuration and a CSI resource configuration indicating one or more frequencies.

The control section 210 may control CSI measurement and CSI reporting using a reference signal at the one or more frequencies.

The control section 210 may control transmission of one CSI report including both Reference Signal Received Power of layer 1 (L1-RSRP) and a Signal to Interference plus Noise Ratio of layer 1 (L1-SINR).

The control section 210 may control transmission of one CSI report including CSI measurement results at a plurality of frequencies.

The transmitting/receiving section 220 may receive configuration information for layer 3 measurement, the configuration information including a configuration for CSI measurement using a reference signal of layer 1. The control section 210 may control measurements and reporting of layer 1 and layer 3, based on the configuration information.

The transmitting/receiving section 220 may receive a measurement timing window for measurement of layer 1 at a plurality of frequencies, the measurement timing window being different for each of the frequencies. The control section 210 may control measurement of the layer 1 during the measurement timing window.

The transmitting/receiving section 220 may receive a measurement gap for measurement of layer 1 at a plurality of frequencies, the measurement gap being different for each of the frequencies. The control section 210 may adjust an antenna for the measurement of the layer 1 in a period of the measurement gap.

The transmitting/receiving section 220 may transmits UE capability information indicating that the UE supports L1 measurement simultaneously in physical cell IDs (PCIs) of different frequencies.

The transmitting/receiving section 220 may transmit UE capability information indicating that the UE supports L1 measurement in asynchronous physical cell IDs (PCIs) of different frequencies.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

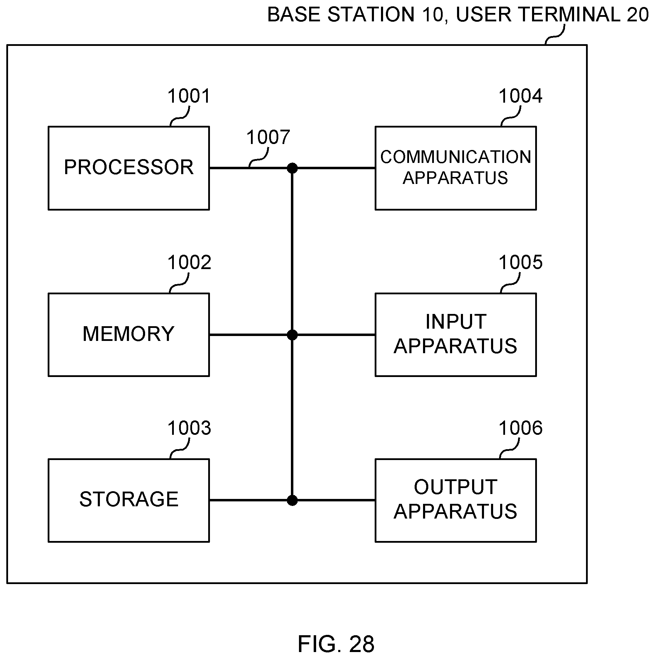

For example, a base station, a user terminal, and so on according to one embodiment of the present disclosure may function as a computer that executes the processes of the radio communication method of the present disclosure. FIG. 28 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

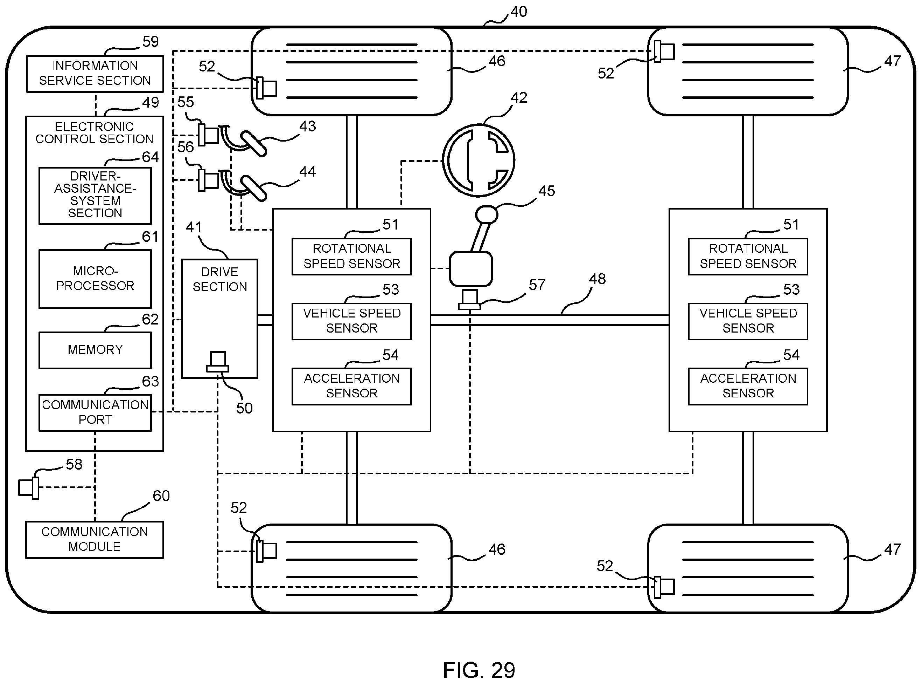

FIG. 29 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives a measurement timing window for measurement of layer 1 at a plurality of frequencies, the measurement timing window being different for each of the frequencies; and
a control section that controls the measurement of layer 1 during the measurement timing window.

2. The terminal according to claim 1, wherein
the receiving section receives a measurement gap for measurement of layer 1 at a plurality of frequencies, the measurement gap being different for each of the frequencies; and
the control section adjusts an antenna for the measurement of layer 1 in a period of the measurement gap.

3. The terminal according to claim 1 further comprising
a transmitting section that transmits UE capability information indicating that the UE supports L1 measurement simultaneously in physical cell IDs (PCIs) of different frequencies.

4. The terminal according to claim 1 further comprising
a transmitting section that transmits UE capability information indicating that the UE supports L1 measurement in asynchronous physical cell IDs (PCIs) of different frequencies.

5. A radio communication method for a terminal, the radio communication method comprising:
receiving a measurement timing window for measurement of layer 1 at a plurality of frequencies, the measurement timing window being different for each of the frequencies; and
controlling the measurement of layer 1 during the measurement timing window.

6. A base station comprising:
a transmitting section that transmits a measurement timing window for measurement of layer 1 at a plurality of frequencies, the measurement timing window being different for each of the frequencies; and
a control section that controls reception of measurement results of the layer 1 during the measurement timing window.
